(19) Europäisches Patentamt
European Patent Office
Office européen des brevets

(11) **EP 3 694 681 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18782404.0**

(22) Anmeldetag: **02.10.2018**

(51) Int Cl.:
***B23K 26/046*** (2014.01)    ***G02B 7/02*** (2021.01)

(86) Internationale Anmeldenummer:
**PCT/EP2018/076811**

(87) Internationale Veröffentlichungsnummer:
**WO 2019/072642 (18.04.2019 Gazette 2019/16)**

(54) **VORRICHTUNG FÜR EIN LASERBEARBEITUNGSSYSTEM, LASERBEARBEITUNGSSYSTEM MIT DERSELBEN UND VERFAHREN ZUM EINSTELLEN EINER FOKUSLAGE EINES OPTISCHEN ELEMENTS**

DEVICE FOR A LASER WORKING SYSTEM, LASER WORKING SYSTEM HAVING SAME, AND METHOD FOR SETTING A FOCAL POSITION OF AN OPTICAL ELEMENT

DISPOSITIF POUR UN SYSTÈME D'USINAGE LASER, SYSTÈME D'USINAGE LASER ÉQUIPÉ DUDIT DISPOSITIF ET PROCÉDÉ POUR AJUSTER LA POSITION FOCALE D'UN ÉLÉMENT OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2017 DE 102017009472**

(43) Veröffentlichungstag der Anmeldung:
**19.08.2020 Patentblatt 2020/34**

(73) Patentinhaber: **Precitec GmbH & Co. KG 76571 Gaggenau (DE)**

(72) Erfinder:
• **THIEL, Marc**
  **76532 Baden-Baden (DE)**
• **LASSOUED, Benjamin**
  **76189 Karlsruhe (DE)**

(74) Vertreter: **Ter Meer Steinmeister & Partner Patentanwälte mbB Nymphenburger Straße 4 80335 München (DE)**

(56) Entgegenhaltungen:
**EP-A1- 0 965 871        EP-A2- 1 477 853**
**EP-B1- 0 965 871        WO-A1-2007/128835**
**US-A1- 2010 201 958     US-A1- 2011 080 663**
**US-A1- 2013 341 309**

**Beschreibung**

Die vorliegende Offenbarung betrifft eine Vorrichtung für ein Laserbearbeitungssystem, ein Laserbearbeitungssystem, insbesondere ein System zur Materialbearbeitung mittels eines Laserstrahls, wie etwa ein Laserbearbeitungskopf zum Laserschneiden oder Laserschweißen, mit derselben und ein Verfahren zum Einstellen einer Fokuslage eines optischen Elements. Die vorliegende Offenbarung betrifft insbesondere die Kompensation eines thermischen Linseneffekts.

**Stand der Technik**

Bei der Materialbearbeitung mittels eines Laserstrahls, wie beispielsweise Laserschweißen oder Laserschneiden, wird der von einer Laserlichtquelle, beispielsweise dem Ende einer Laserleitfaser, austretende Laserstrahl mit Hilfe einer Strahlführungs- und Fokussierungsoptik auf das zu bearbeitende Werkstück fokussiert. Standardmäßig wird ein Laserbearbeitungskopf mit einer Kollimatoroptik und einer Fokussierungsoptik verwendet, wobei das Laserlicht über eine Lichtleitfaser, auch als Laserquelle bezeichnet, zugeführt wird. Das Laserlicht tritt in einer Vorrichtung zur Materialbearbeitung mittels Laser, z.B. in einem Laserbearbeitungskopf, durch eine Vielzahl von optischen Elementen, wie z.B. Linsen, hindurch.

Bei optischen Elementen, wie Linsen und Linsensystemen, in Laseranwendungen können lokale Erwärmungen aufgrund einer Absorption von Laserenergie auftreten. Diese Absorption führt zu einem Temperaturgradienten, der den Brechungsindex n(T) der Linse lokal ändert. Durch die unterschiedlichen Brechungsindizes der Linse kommt es zu einer Verschiebung des Laserfokus. Beispielsweise können je nach Linsenmaterial eine negative oder positive Fokusverschiebung auftreten. Dieser Fokusversatz führt zu einer Verminderung der Bearbeitungsqualität bei Laseranwendungen, wie beispielsweise bei Schneidprozessen.

In herkömmlichen Anwendungen kann eine Kühlung der Linse erfolgen, um Wärme aus dem Zentrum der Linse abzuführen. Jedoch entsteht auch dadurch ein Temperaturgradient, der den Fokus verschiebt. Aus der US 8274743 B2 ist die Verwendung unterschiedlicher Linsenmaterialien innerhalb eines Linsensystems zur Kompensation des Fokusversatzes bekannt. Eine solche passive Kompensation ist allerdings nicht für alle Anwendungen geeignet.

Aus der US 5991004 A ist weiter bekannt, durch ein Gitter ein Lichtmuster zu erzeugen, das durch die Linse geleitet wird. Dieses Lichtmuster wird durch eine CCD Kamera erfasst und registriert Verschiebungen des Musters. Diese Verschiebungen werden benutzt, um den Fokus durch Verfahren der Optik auszugleichen.

Weitere herkömmliche Ansätze verwenden Temperaturmessungen. So wird beispielsweise in der JP 2000094173 A eine Linsentemperatur mit einem Thermoelement am Rand der Linse gemessen. Anders gesagt wird die gemittelte Erwärmung über den Rand des optischen Elements detektiert.

In der JP 01122688 A wird mittels eines "Single Thermopiles" (Thermoelement) die Temperatur auf der Linse und durch ein weiteres Thermoelement am Rand der Linse ermittelt. Anders gesagt erfolgt eine punktuelle Aufnahme der Temperatur auf der Fläche und am Rande, also eine eindimensionale Messung. Eine Mikrosteuerung wertet die Messdaten aus und verfährt die Linse motorisch.

US 2013 341309 A1 beschreibt eine Laserbearbeitungsvorrichtung nach dem Oberbegriff des Anspruchs 1 mit einer Linse in einem optischen Pfad eines Laserstrahls und einem Temperatursensor vom Berührungstyp, der eine Anordnung mehrerer Temperaturmesspunkte auf einer Oberfläche einer Linse umfasst. In einem Beispiel ist ein Thermosäulen-Temperaturdifferenzsensor auf der Linse angebracht, der in mehrere Regionen unterteilt ist.

WO 2007 128835 A1 beschreibt ein System für Halbleiter-Immersionslithographie. An einer Linse werden Temperaturen gemessen, um eine Heizleistung von Peltier-Elementen zu steuern.

GEAENDERTES BLATT

EP 1 477 853 A2 beschreibt Temperatursensoren in Halteteilen am Rand eines optischen Elements für EUV-Lithographie.

US 2010 201958 A1 beschreibt eine Vorrichtung zum Beeinflussen der Temperaturverteilung in einem optischen Element. In einem Beispiel ist jede Beheizungszone mit einem Temperatursensor ausgestattet.

US 2011 080663 A1 beschreibt ein optisches Element, welches beheizt und/oder gekühlt werden kann. In einem Beispiel enthalten Temperaturelemente ein Heizelement und eine Temperaturmessvorrichtung.

EP 0 965 871 A1 beschreibt ein Steuern einer Temperaturverteilung eines optischen Elements mittels Peltier-Elementen.

**Offenbarung der Erfindung**

Es ist eine Aufgabe der vorliegenden Offenbarung, eine Vorrichtung für ein Laserbearbeitungssystem, ein Verfahren zum Einstellen einer Fokuslage eines optischen Elements sowie ein Laserbearbeitungssystem, insbesondere ein System zur Materialbearbeitung mittels eines Laserstrahls, wie etwa ein Laserbearbeitungskopf oder ein System zum Laserschneiden oder Laserschweißen, bereitzustellen, die eine Kompensation eines thermisch bedingten Fokusversatzes eines optischen Elements mit hoher Präzession erlauben.

Diese Aufgabe wird durch den Gegenstand der unabhängigen Ansprüche gelöst. Vorteilhafte Ausgestaltungen der Erfindung sind in den Unteransprüchen angegeben.

Gemäß Ausführungsformen der vorliegenden Offenbarung ist eine Vorrichtung für ein Laserbearbeitungssystem angegeben. Die Vorrichtung umfasst ein optisches Element, das in einem Strahlengang der Vorrichtung angeordnet ist, und eine Temperatur-Detektoranordnung mit einer Thermosäulen-Matrix die eingerichtet ist, um eine zweidimensionale Temperaturverteilung des optischen Elements zur Einstellung der Fokuslage des optischen Elements zu messen. Das optische Element kann dazu eingerichtet sein, einen Laserstrahl zu fokussieren und/oder zu kollimieren.

Vorzugsweise ist die Matrix von Detektorelementen mindestens eine 2x2 Matrix. Insbesondere kann eine 4x4 Matrix mit 16 Bildpunkten verwendet werden.

Vorzugsweise umfasst die Vorrichtung weiter wenigstens eine Heizvorrichtung, die am optischen Element angeordnet ist, um dem optischen Element Wärmeenergie zuzuführen.

Vorzugsweise umfasst die Vorrichtung eine thermische Isolierung, die eingerichtet ist, um die wenigstens eine Heizvorrichtung thermisch zu isolieren.

Vorzugsweise ist die wenigstens eine Heizvorrichtung an einem Randbereich des optischen Elements angeordnet, um dem Randbereich die Wärmeenergie zuzuführen.

Vorzugsweise weist das optische Element eine thermisch leitende Beschichtung auf. Vorzugsweise weist die wenigstens eine Heizvorrichtung eine Vielzahl von Heizelementen auf, und insbesondere bildet die Vielzahl von Heizelementen einen aus mehreren Segmenten bestehenden Heizring.

Vorzugsweise umfasst die wenigstens eine Heizvorrichtung einen einzelnen Heizring.

Vorzugsweise umfasst die wenigstens eine Heizvorrichtung eine Basis und eine Vielzahl von Wärmequellen, die an der Basis angeordnet sind.

Vorzugsweise umfasst die Vorrichtung weiter ein thermisches Kopplungselement zum thermischen Koppeln der Wärmequellen mit dem optischen Element.

Vorzugsweise sind die Wärmequellen elektrische Widerstände.

Vorzugsweise umfasst die Vorrichtung weiter eine Halterung für das optische Element, wobei die Halterung zwischen der wenigstens einen Heizvorrichtung und dem optischen Element angeordnet ist und eingerichtet ist, um einen thermischen Kontakt zwischen dem optischen Element und der wenigstens einen Heizvorrichtung bereitzustellen.

Vorzugsweise umfasst die Vorrichtung weiter eine Steuerung, die eingerichtet ist, um die wenigstens eine Heizvorrichtung so zu steuern, dass das optische Element eine vorbestimmte Temperaturverteilung aufweist.

Vorzugsweise ist die vorbestimmte Temperaturverteilung eine im Wesentlichen homogene Temperaturverteilung.

Vorzugsweise ist die Steuerung eingerichtet, um einen Fokus des optischen Elements durch Zuführen der Wärmeenergie einzustellen.

Vorzugsweise umfasst die Vorrichtung eine Antriebsvorrichtung, die eingerichtet ist, um eine Position des optischen Elements einzustellen.

Vorzugsweise umfasst die Vorrichtung weiter eine Steuerung zum Steuern der Antriebsvorrichtung, um die Position des optischen Elements basierend auf der gemessenen Temperaturverteilung einzustellen.

Vorzugsweise steuert die Steuerung die Antriebsvorrichtung, um einen Fokus des optischen Elements einzustellen, und insbesondere um den Fokus des optischen Elements im Wesentlichen konstant zu halten.

Vorzugsweise ist oder umfasst das optische Element mindestens eines von einer Linse, einem Linsensystem, einer Fokussierlinse, einer Kollimierlinse, eine Zerstreuungslinse, eine Strahlformungsoptik, einem Schutzglas, einem Strahlteiler oder ähnlichem.

Vorzugsweise besteht oder enthält das optische Element aus Silizium und/oder Glas.

Gemäß weiteren Ausführungsformen der vorliegenden Offenbarung ist eine Vorrichtung für ein Laserbearbeitungssystem angegeben. Die Vorrichtung umfasst ein optisches Element, das in einem Strahlengang der Vorrichtung angeordnet ist, und wenigstens eine Heizvorrichtung, die am optischen Element angeordnet ist, um dem optischen Element Wärmeenergie zuzuführen. Das optische Element kann dazu eingerichtet sein, einen Laserstrahl zu fokussieren und/oder zu kollimieren.

Gemäß weiteren Ausführungsformen der vorliegenden Offenbarung ist eine Vorrichtung für ein Laserbearbeitungssystem angegeben. Die Vorrichtung umfasst ein optisches Element, das in einem Strahlengang der Vorrichtung angeordnet ist, eine Temperatur-Detektoranordnung mit einer Matrix von Detektorelementen, die eingerichtet ist, um eine zweidimensionale Temperaturverteilung des optischen Elements zu messen, und eine Antriebsvorrichtung, die eingerichtet ist, um eine Position des optischen Elements einzustellen. Das optische Element kann dazu eingerichtet sein, einen Laserstrahl zu fokussieren und/oder zu kollimieren.

Gemäß weiteren Ausführungsformen der vorliegenden Offenbarung ist ein Laserbearbeitungssystem, wie zum Beispiel ein System zur Materialbearbeitung mittels eines Laserstrahls bzw. ein Laserbearbeitungskopf, insbesondere zum Laserschneiden oder zum Laserschweißen, angegeben. Das Laserbearbeitungssystem bzw. der Laserbearbeitungskopf umfasst eine Laserquelle zum Bereitstellen eines Laserstrahls und die Vorrichtung für ein Laserbearbeitungssystem gemäß den hier beschriebenen Ausführungsformen, wobei das optische Element in einem Strahlengang des Laserbearbeitungssystem bzw. des Laserbearbeitungskopfes angeordnet ist. Das Laserbearbeitungssystem bzw. der Laserbearbeitungskopf kann eine Kollimator-Optik, die eingerichtet ist, um einen Laserstrahl zu kollimieren, und eine Fokussier-Optik, die eingerichtet ist, um den Laserstrahl auf ein Werkstück zu fokussieren, umfassen.

Gemäß anderen Ausführungsformen ist ein Verfahren zum Einstellen einer Fokuslage eines optischen Elements angegeben. Das Verfahren umfasst ein Messen einer zweidimensionalen Temperaturverteilung des optischen Elements mit einer Matrix von Detektorelementen.

Vorzugsweise wird die Temperaturverteilung ortsaufgelöst für eine Oberfläche des optischen Elements gemessen.

Vorzugsweise umfasst das Verfahren ein selektives Heizen des optischen Elements, um die Fokuslage einzustellen.

Vorzugsweise wird ein Randbereich des optischen Elements selektiv geheizt.

Vorzugsweise umfasst das Verfahren ein Bereitstellen einer im wesentlichen homogenen Temperaturverteilung für das optische Element durch das selektive Heizen.

Vorzugsweise umfasst das Verfahren ein Einstellen einer Position des optischen Elements basierend auf der gemessenen Temperaturverteilung.

Gemäß anderen Ausführungsformen ist ein Verfahren zum Einstellen einer Fokuslage eines optischen Elements angegeben. Das Verfahren umfasst ein selektives Heizen des optischen Elements, um die Fokuslage einzustellen.

Gemäß weiteren Ausführungsformen ist ein Verfahren zum Einstellen einer Fokuslage eines optischen Elements angegeben. Das Verfahren umfasst ein Messen einer zweidimensionalen Temperaturverteilung des optischen Elements mit einer Matrix von Detektorelementen, und ein Einstellen einer Position des optischen Elements basierend auf der gemessenen Temperaturverteilung.

Bevorzugte, optionale Ausführungsformen und besondere Aspekte der Offenbarung ergeben sich aus den abhängigen Ansprüchen, den Zeichnungen und der vorliegenden Beschreibung.

Erfindungsgemäß wird die Fokuslage des optischen Elements, wie beispielsweise einer Fokuslinse, eingestellt. Hierzu wird eine zweidimensionale Temperaturverteilung des optischen Elements gemessen und benutzt, um die Fokuslage einzustellen. Beispielsweise kann eine Thermosäulen-Matrix verwendet werden, um eine zweidimensionale "Karte" der Temperaturverteilung an einer Oberfläche des optischen Elements zu erstellen, aus der ein Temperaturgradient ermittelt werden kann. Durch eine solche ortsaufgelöste Messung kann die Fokuslage mit hoher Präzision eingestellt werden. Gemäß einem Aspekt wird das optische Element aktiv geheizt, um die Fokuslage basierend auf der gemessenen Temperatur einzustellen. Beispielsweise kann das optische Element derart geheizt werden, dass das optische Element eine im wesentlichen homogene Temperaturverteilung aufweist. Durch das selektive Heizen kann die Fokuslage mit hoher Präzision eingestellt werden. Gemäß einem weiteren Aspekt wird eine Position des optischen Elements basierend auf der gemessenen Temperaturverteilung eingestellt, um die Fokuslage einzustellen.

**Kurze Beschreibung der Zeichnungen**

Ausführungsbeispiele der Offenbarung sind in den Figuren dargestellt und werden im Folgenden näher beschrieben. Es zeigen:

Figur 1 eine schematische Ansicht einer Vorrichtung für ein Laserbearbeitungssystem gemäß Ausführungsformen der vorliegenden Offenbarung,

Figur 2 eine schematische Draufsicht eines optischen Elements mit einer Vielzahl von Heizelementen gemäß Ausführungsformen der vorliegenden Offenbarung,

Figuren 3A und B Temperaturverteilungen des optischen Elements der Figur 2 gemäß Ausführungsformen der vorliegenden Offenbarung,

Figur 4 eine schematische Draufsicht eines optischen Elements mit einem Heizring gemäß Ausführungsformen der vorliegenden Offenbarung,

Figur 5 eine schematische Ansicht einer Vorrichtung für ein Laserbearbeitungssystem gemäß weiteren Ausführungsformen der vorliegenden Offenbarung,

Figur 6 eine schematische Ansicht einer Vorrichtung für ein Laserbearbeitungssystem gemäß anderen Ausführungsformen der vorliegenden Offenbarung,

Figur 7 eine beispielhafte Fokusverschiebung in Abhängigkeit eines Temperaturgradienten,

Figur 8 eine beispielhafte Fokusverschiebung in Abhängigkeit eines Temperaturgradienten mit Regressionsgerade,

Figur 9 eine Pixel-Matrix und eine damit aufgenommene Temperaturverteilung,

Figur 10 einen Vergleich der Auflösung und der Genauigkeit der Temperaturbestimmung zwischen einer eindimensionalen Messung und einer zweidimensionalen Messung,

Figur 11 eine schematische Ansicht einer Vorrichtung für ein Laserbearbeitungssystem gemäß weiterer Ausführungsformen der vorliegenden Offenbarung, und

Figur 12 eine schematische Darstellung eines Laserbearbeitungssystems gemäß Ausführungsformen der vorliegenden Offenbarung.

**Ausführungsformen der Offenbarung**

Im Folgenden werden, sofern nicht anders vermerkt, für gleiche und gleichwirkende Elemente gleiche Bezugszeichen verwendet.

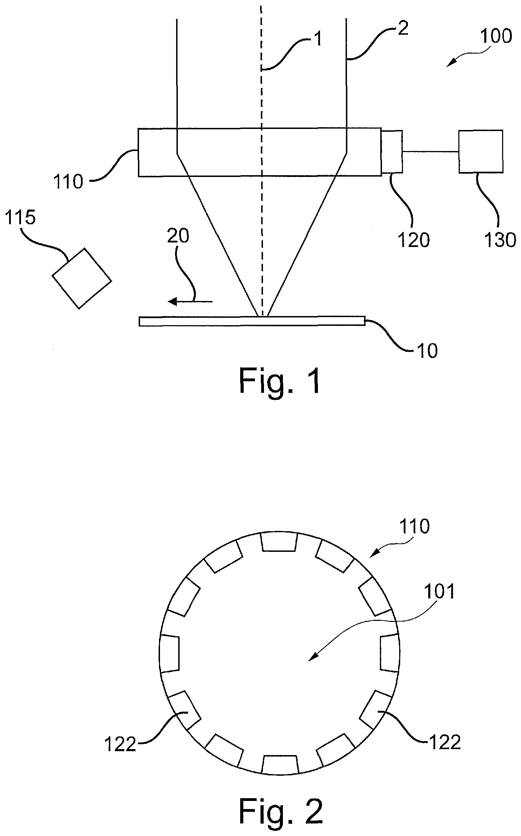

Figur 1 zeigt eine Vorrichtung 100 für ein Laserbearbeitungssystem, und insbesondere ein System zur Materialbearbeitung mittels eines Laserstrahls, etwa zum Laserschneiden oder Laserschweißen, gemäß Ausführungsformen der vorliegenden Offenbarung. Die Vorrichtung 100 kann einen Fokusversatz (auch als "Fokusshift" bezeichnet) überwachen und durch eine Temperaturregulierung kompensieren. Durch Absorption eines Laserstrahls heizt sich das optische Element 110 vor allem am Ort des Laserdurchtritts auf, d.h. in der Regel in der Mitte.

Der Fokusversatz entsteht durch eine lokale Temperaturerhöhung in und/oder auf dem optischen Element, die zu einem anderen Brechungsindex bezüglich des Rands des optischen Elements führt ($\Delta n$). Dies kann beispielsweise durch eine geringe Wärmeleitfähigkeit des Materials des optischen Elements verursacht werden. Der Brechungsindex kann durch die folgende Formel ausgedrückt werden:

$$n(T) = n_0(\lambda) + \frac{dn_{abs}(\lambda, T)}{dT} \cdot \Delta T. \qquad (1)$$

Anstatt die Wärme über den Rand der Linse abzuführen, wie es in einigen herkömmlichen Systemen der Fall ist, wird gemäß einigen Ausführungsformen der vorliegenden Offenbarung Wärme beispielsweise in den Rand des optischen Elements eingebracht und das optische Element thermisch reguliert. Hierdurch kann insbesondere ein Temperaturgleichgewicht zwischen einem Innenbereich und einem Außenbereich des optischen Elements eingestellt werden, um die Fokuslage einzustellen. In anderen Ausführungsformen kann die Position des optischen Elements beispielsweise entlang der z-Achse eingestellt werden, um die Fokuslage einzustellen.

Wie in der Figur 1 dargestellt ist umfasst die Vorrichtung 100 wenigstens ein optisches Element 110, das eingerichtet ist, um einen Laserstrahl 2 beispielsweise auf ein Werkstück 10 zu fokussieren, und eine Temperatur-Detektoranordnung 115 mit einer Matrix von Detektorelementen, die eingerichtet ist, um eine zweidimensionale Temperaturverteilung des optischen Elements zu messen. Die Temperatur-Detektoranordnung 115 kann für eine ortsaufgelöste Messung der Temperaturverteilung des optischen Elements 110 eingerichtet sein.

Die Temperaturverteilung kann eine absolute Temperaturverteilung oder eine relative Temperaturverteilung sein. Die absolute Temperaturverteilung basiert auf einer Messung der absoluten Temperatur, wohingegen die relative Temperaturverteilung eine Temperaturdifferenz angibt, z.B. bezogen auf die Randtemperatur des optischen Elements 110. Die Temperaturverteilung kann eine Temperaturverteilung auf einer Oberfläche des optischen Elements 110 sein, wie beispielsweise eine Temperaturverteilung auf einer ersten Oberfläche oder einer der ersten Oberfläche gegenüberliegenden zweiten Oberfläche.

Insbesondere kann das optische Element 110 die erste Oberfläche, die zweite Oberfläche, und wenigstens eine Seitenfläche aufweisen. Die zweite Oberfläche kann dem Werkstück 10 zugewandt sein und/oder die erste Oberfläche kann der zweiten Oberfläche gegenüberliegend angeordnet sein. Die wenigstens eine Seitenfläche kann Ränder der ersten Oberfläche und der zweiten Oberfläche verbinden. Die wenigstens eine Seitenfläche kann eine zylindrische Form aufweisen.

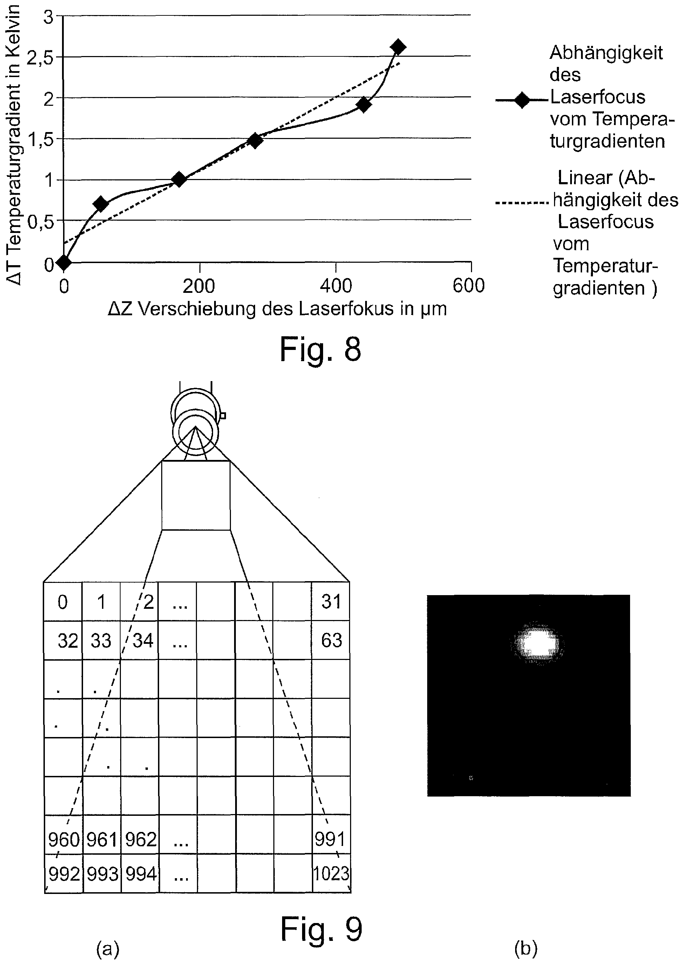

Erfindungsgemäß umfasst die Temperatur-Detektoranordnung eine Thermosäulen-Anordnung (Thermosäulen-Array). Mittels der Temperatur-Detektoranordnung kann eine Temperaturüberwachung des optischen Elements erfolgen. Mit einem Thermosäulen-Array können auch einzelne kleine punktuelle Verschmutzungen/Defekte des optischen Elements detektiert werden, die mit einer Standard-Temperaturmessung nicht erkannt werden können. Die Temperatur-Detektoranordnung ist unter Bezugnahme auf die Figur 9 näher beschrieben.

In einigen Ausführungsformen umfasst die Vorrichtung 100 wenigstens eine Heizvorrichtung 120, die am optischen Element 110 angeordnet ist, um dem optischen Element 110 Wärmeenergie zuzuführen. Durch selektives und/oder lokales Heizen des optischen Elements 110 kann eine Fokuslage des optischen Elements 110 eingestellt werden. Insbesondere kann durch das selektive Heizen beispielsweise eines Randbereichs des optischen Elements 110 eine im wesentlichen homogenen Temperaturverteilung bereitgestellt werden.

Das optische Element 110 kann eine Linse, wie beispielsweise eine Fokussierlinse sein. Im Fall von Schweißoptiken werden häufig sphärische oder asphärische Fokussierlinse eingesetzt. Erfindungsgemäß kann der Fokusversatz durch lokales Heizen der Linse kompensiert werden. Ein Temperaturgradient, der beispielsweise bei einer aktiven Kühlung der Linse entstehen würde, kann vermieden werden.

Das Laserbearbeitungssystem kann eine optischen Achse 1 definieren, wobei der Laserstrahl 2 in Bezug auf die optische Achse verläuft. Beispielsweise kann der Laserstrahl 2 im Wesentlichen parallel oder verkippt zur optischen Achse 1 verlaufen. Das Laserbearbeitungssystem oder Teile davon, wie beispielsweise ein Schweißkopf, kann gemäß Ausführungsformen entlang einer Bearbeitungsrichtung 20 bewegbar sein. Die Bearbeitungsrichtung 20 kann eine Schneidrichtung und/oder eine Bewegungsrichtung des Laserbearbeitungssystems bezüglich des Werkstücks 10 sein. Insbesondere kann die Bearbeitungsrichtung 20 eine horizontale Richtung sein. Die Bearbeitungsrichtung 20 kann auch als "Vorschubrichtung" bezeichnet werden.

Gemäß einigen Ausführungsformen, die mit anderen hier beschriebenen Ausführungsformen kombiniert werden können, kann die wenigstens eine Heizvorrichtung 120 an oder auf wenigstens einer der ersten Oberfläche, der zweiten Oberfläche und der wenigstens einen Seitenfläche angeordnet sein. Die erste Oberfläche und die zweite Oberfläche können konvex oder konkav sein. In manchen Ausführungsformen können die erste Oberfläche und die zweite Oberfläche beide dieselbe Form aufweisen, also beispielsweise konvex oder konkav sein. In anderen Ausführungsformen können die erste Oberfläche und die zweite Oberfläche verschiedene Formen aufweisen. Beispielsweise kann eine Oberfläche konvex und die andere Oberfläche konkav sein.

Typischerweise ist die wenigstens eine Heizvorrichtung 120 an oder auf einem Randbereich des optischen Elements 110 angeordnet, um dem Randbereich die Wärmeenergie zuzuführen. Im Beispiel der Figur 1 ist die wenigste eine Heizvorrichtung 120 an der wenigstens einen Seitenfläche, die ein Rand oder Außenrand des optischen Elements 110 sein kann, angeordnet.

In einigen Ausführungsformen weist das optische Element 110 eine thermisch leitende Beschichtung auf. Die thermisch leitende Beschichtung kann beispielsweise verwendet werden, um die niedrige Wärmeleitfähigkeit von Quarzgläsern oder Optiken zu verbessern. Beispielswiese kann die thermisch leitende Beschichtung aus Saphir bestehen. In manchen Ausführungsformen kann eine Fläche, an der die wenigstens eine Heizvorrichtung 120 angeordnet ist, zumindest teilweise, und vorzugsweise vollständig, beschichtet sein. Typischerweise kann die wenigstens eine Seitenfläche (z.B. der Linsenrand) mit der thermisch leitenden Beschichtung versehen sein. Die vorliegende Offenbarung ist jedoch nicht hierauf begrenzt. Es können auch Randbereiche der ersten Oberfläche und/oder der zweiten Oberfläche beschichtet sein, beispielsweise wenn die wenigstens eine Heizvorrichtung an der ersten Oberfläche und/oder der zweiten Oberfläche angeordnet ist (siehe Figur 2).

Beispielsweise besitzt Corning 7980® (Quarzglas) eine Wärmeleitfähigkeit von

$$\lambda = 1,3 \ \frac{\text{W}}{\text{m K}}.$$

Wenn der Randbereich unter den Heizelementen beispielsweise mit Saphir beschichtet wird

$$(\lambda = 27,21 \ \frac{\text{W}}{\text{m K}}),$$

kann eine erhebliche Verbesserung der Wärmezufuhr in das optische Element erreicht werden. Hierdurch können ein homogeneres Temperaturprofil erreicht und der Fokusversatz verringert werden.

Gemäß einigen Ausführungsformen, die mit anderen hier beschriebenen Ausführungsformen kombiniert werden können, umfasst die Vorrichtung 100 eine Steuerung 130, die eingerichtet ist, um die wenigstens eine Heizvorrichtung 120 so zu steuern, dass das optische Element 110 eine vorbestimmte Temperaturverteilung aufweist. Die vorbestimmte Temperaturverteilung kann eine im wesentlichen homogene Temperaturverteilung sein. Typischerweise ist die Steuerung 130 eingerichtet, um einen Fokus des optischen Elements 110 durch Zuführen der Wärmeenergie einzustellen. Insbesondere kann der thermisch verursachte Fokusversatz durch lokales Zuführen der Wärmeenergie kompensiert werden.

In typischen Ausführungsformen kann gezielt der Randbereich mittels der wenigstens einen Heizvorrichtung 120 auf eine beispielsweise in der Mitte des optischen Elements 110 gemessene Temperatur reguliert werden. Die wenigstens eine Heizvorrichtung 120 kann eine Vielzahl von Heizelementen umfassen. Durch die Vielzahl von Heizelementen kann selbst bei asymmetrischen Temperaturverteilungen eine nahezu symmetrische/homogene Erwärmung des optischen Elements 110 gewährleistet werden. Beispielsweise liegen die Temperaturen, die durch die wenigstens eine Heizvorrichtung 120 erreicht werden können, bei ca. 30 bis 60 °C. Beispielsweise bei einer Laserleistung von 6000 Watt erhitzt sich eine Linse in der Mitte auf maximal 40 °C.

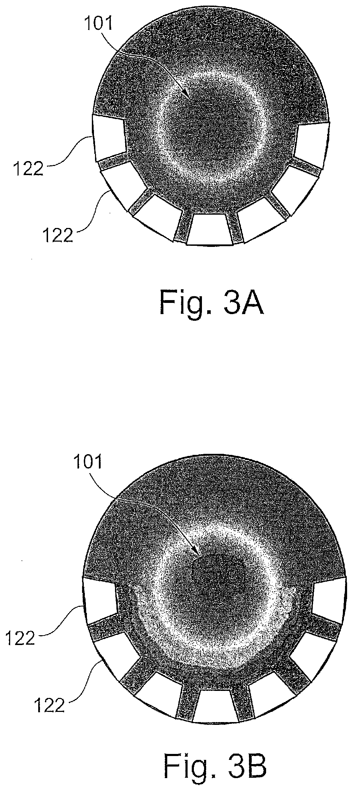

Figur 2 zeigt eine schematische Draufsicht eines optischen Elements 110 gemäß Ausführungsformen der vorliegenden Offenbarung. Figuren 3A und B zeigen Temperaturverteilungen des optischen Elements der Figur 2.

Gemäß Ausführungsformen, die mit anderen hier beschriebenen Ausführungsformen kombiniert werden können, umfasst die wenigstens eine Heizvorrichtung eine Vielzahl von Heizelementen 122. Die Heizelemente 122 können an der Seitenfläche des optischen Elements 110 angeordnet sein. Zusätzlich oder alternativ können die Heizelemente 122 an der ersten Oberfläche und/oder der zweiten Oberfläche des optischen Elements 110 angeordnet sein, wie es im Beispiel der Figur 2 dargestellt ist. Die Heizelemente 122 können in einem Randbereich der ersten Oberfläche und/oder der zweiten Oberfläche angeordnet sein, so dass eine Mitte 101 des optischen Elements 110, durch die der Laserstrahl hindurchläuft, frei bzw. nicht behindert ist.

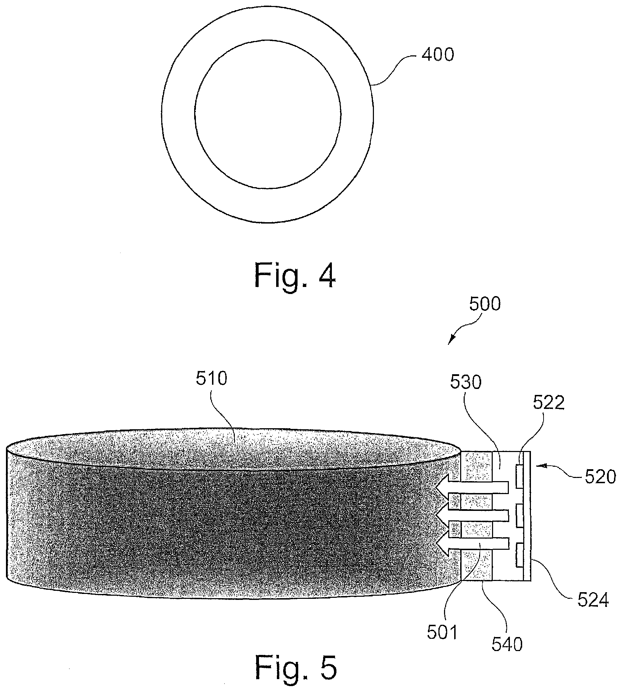

In einigen Ausführungsformen können die Heizelemente 122 einen Heizring bilden, der aus mehreren Segmenten, also den einzelnen Heizelementen, besteht. Figur 4 zeigt eine schematische Draufsicht einer alternativen Ausführungsformen eines optischen Elements mit einem durchgängigen Heizring 400.

Die Steuerung kann eingerichtet sein, um die Heizelemente 122 einzeln und/oder selektiv anzusteuern. Beispielsweise kann eine Regulierung durch eine an den Heizring angelegte Spannung erfolgen. Die Steuerung, die ein Mikrocontroller sein kann, kann die Temperaturauswertung und Regulierung des Heizelementes bzw. der Heizelemente übernehmen. Basierend auf der mittels der Temperatur-Detektoranordnung aufgenommenen Temperatur des optischen Elements 110 bzw. Linse, z.B. in der Linsenmitte, kann die Steuerung das optische Element 110 bzw. die Linse über die Heizelemente auf eine im wesentlichen gleiche Temperatur bringen und damit die Temperatur an eine homogene Temperaturverteilung annähern. Dadurch kann der Fokusversatz kompensiert werden. Insbesondere kann das optische Element komplett auf eine homogene Temperatur erhitzt werden, um einen homogenen Brechungsindex des optischen Elements zu gewährleisten.

Gemäß einigen Ausführungsformen, die mit anderen hier beschriebenen Ausführungsformen kombiniert werden können, umfasst die Vorrichtung weiter eine thermische Isolierung, die eingerichtet ist, um die wenigstens eine Heizvorrichtung thermisch zu isolieren. Mit der thermischen Isolierung kann das optische Element vor einer Wärmeabfuhr geschützt werden. Die thermische Isolierung kann verhindern, dass die einzelnen Heizelemente nicht zu viel Energie in ein umliegendes Gehäuse und/oder in die Luft abstrahlen, sondern gezielt das optische Element erhitzen. Hierdurch kann das Laserbearbeitungssystem energetisch optimiert werden.

In manchen Ausführungsformen umfasst die wenigstens eine Heizvorrichtung eine Basis und eine Vielzahl von Wärmequellen, die an der Basis angeordnet sind. Die Basis kann ein Substrat oder eine Platine sein. Typischerweise können die Wärmequellen elektrische Widerstände sein, wie beispielsweise niederohmige Widerstände. Beispielsweise können auf einer Platine niederohmige Widerstände positioniert werden, die als Heizquelle dienen. Die Vorrichtung, und insbesondere die wenigstens eine Heizvorrichtung, kann zudem ein thermisches Kopplungselement (z.B. ein Thermal Pad) zum thermischen Koppeln der Wärmequellen mit dem optischen Element umfassen. Typischerweise umfasst (oder ist) das thermische Kopplungselement ein gummiartiges Material vorzugsweise mit einer hohen Wärmeleitfähigkeit.

Bezugnehmend auf die Figuren 3A und B ist aus Übersichtsgründen nur die Hälfte des aus einzelnen Segmenten bestehenden Heizrings dargestellt. Figur 3A zeigt eine Temperaturverteilung, bei der ein Zentrum 101 der Linse durch Absorption auf eine Temperatur $T_1$ erhitzt ist, wodurch einen Fokusversatz entsteht. Die Heizelemente 122 werden selektiv angesteuert, um den Fokusversatz zu kompensieren. Beispielsweise kann der Randbereich des optischen Elements auf eine Temperatur $T_2$ erhitzt werden. Eine homogene Temperatur wird erreicht, wenn $T_1=T_2$ ist. Die thermische Linse kann somit thermisch reguliert werden.

Figur 3B zeigt eine asymmetrische Temperaturverteilung, z.B. aufgrund eines nicht exakt mittig ausgerichteten Laserdurchtritts oder Verschmutzungen. In diesem Fall können, wie es in Figur 3A dargestellt ist, die Heizelemente 122 separat geheizt werden, um die Linse auf eine homogene Temperatur zu regulieren, so dass eine Temperaturdifferenz beispielsweise zwischen Mitte und Rand der Linse in etwa null ist ($T_1-T_2=\Delta T=0$).

Figur 5 zeigt eine schematische Ansicht einer Vorrichtung 500 für ein Laserbearbeitungssystem gemäß weiteren Ausführungsformen der vorliegenden Offenbarung.

Als Heizquelle bzw. als Heizvorrichtung 520 dienen in diesem Beispiel niederohmige Widerstände 522, die auf einer Platine 524 montiert sind. Die Platine 524 kann auch der Wärmeisolierung nach außen hin zum Gehäuse dienen, um den Wirkungsgrad der thermischen Regulierung zu erhöhen. Anders gesagt dient die Platine 524 als die thermische Isolierung, die eingerichtet ist, um die wenigstens eine Heizvorrichtung 520 thermisch zu isolieren. Eine Wärmezufuhr erfolgt vom Rand der Linse 510 aus zum thermischen Kompensieren des Fokusvorsatzes, wie es durch die Pfeile 501 angedeutet ist.

Die Vorrichtung 500, und insbesondere die wenigstens eine Heizvorrichtung 520, umfasst gemäß Ausführungsformen das thermische Kopplungselement 530 (z.B. ein Thermal Pad) zum thermischen Koppeln der Wärmequellen mit dem optischen Element 510. Typischerweise umfasst (oder ist) das thermische Kopplungselement 530 ein gummiartiges Material vorzugsweise mit einer hohen Wärmeleitfähigkeit.

Gemäß einigen Ausführungsformen, die mit anderen hier beschriebenen Ausführungsformen kommen werden können, umfasst die Vorrichtung 500 eine Halterung 540 für das optische Element 510, wobei die Halterung zwischen der wenigstens einen Heizvorrichtung 520 und dem optischen Element 510 angeordnet ist und eingerichtet ist, um einen thermischen Kontakt zwischen dem optischen Element 510 und der wenigstens einen Heizvorrichtung 520 bereitzustellen. Hierzu kann die Halterung das optische Element 510 direkt mechanisch kontaktieren.

Das optische Element 510, wie beispielsweise die Linse, kann über die Halterung (ihre Linsenfassung) thermisch kontaktiert und reguliert werden. Dies kann beispielsweise durch einzeln angesteuerte niederohmige Widerstände geschehen. Diese Wiederstände können in einem Bearbeitungskopf untergebracht werden und dabei den Linsenrand über die metallische Linsenfassung thermisch regulieren. Das Platinenmaterial, auf dem die Widerstände angeordnet sind, kann gleichzeitig als thermische Isolierung dienen. Eine Erwärmung einzelner Segmente der Linse kann gesteuert werden, wodurch eine thermische Regulierung auch bei asymmetrischer Laserstrahlverteilung gewährleistet wird.

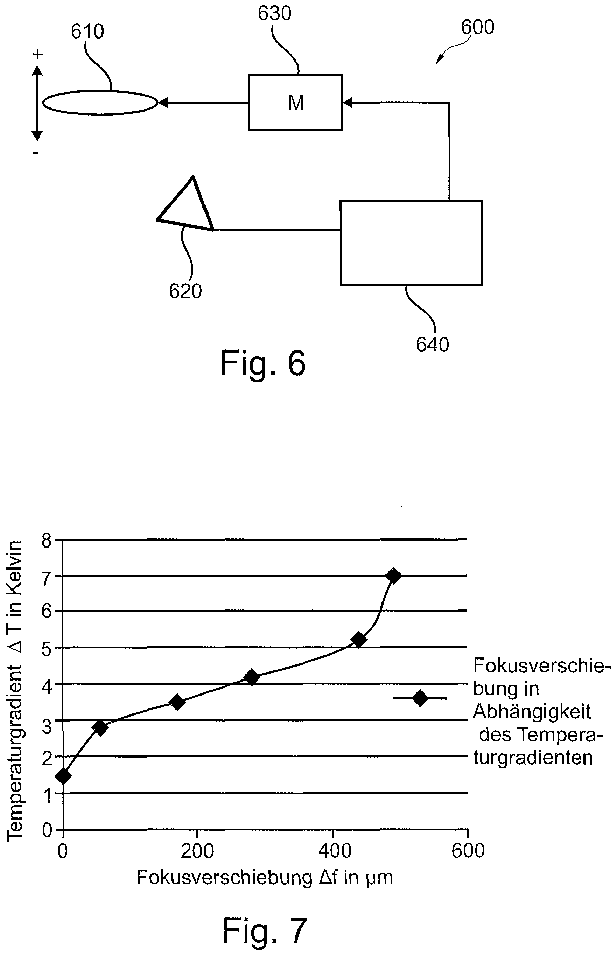

Figur 6 zeigt eine schematische Ansicht einer Vorrichtung 600 für ein Laserbearbeitungssystem gemäß anderen Ausführungsformen der vorliegenden Offenbarung.

Wie bereits erläutert entsteht und beruht der Fokusversatz auf einer lokalen Temperaturerhöhung in und auf der Linse, die zu einem anderen Brechungsindex führt (Δn). Dieser Temperaturgradient ändert die Fokuslage je nach Linsenmaterial. Gemäß der vorliegenden Offenbarung wird die Temperatur des optischen Elements ortsaufgelöst gemessen (z.B. in der x-y-Ebene bzw. einer Projektion der Linsenoberfläche in der x-y-Ebene), um damit einen Temperaturgradienten des optischen Elements aufzunehmen. Eine Antriebsvorrichtung, wie beispielsweise ein Motor, reguliert das optische Element je nach Fokusverschiebung z.B. in z-Richtung, z.B. entlang der optischen Achse, nach. Eine Steuerung, wie beispielsweise ein Mikrocontroller, kann die Temperaturauswertung und Regulierung des Motors übernehmen.

Bezugnehmend auf die Figur 6 umfasst die Vorrichtung 600 für ein Laserbearbeitungssystem das optische Element 610, das eingerichtet ist, um einen Laserstrahl zu fokussieren, eine Temperatur-Detektoranordnung 620, die eingerichtet ist, um eine zweidimensionale Temperaturverteilung des optischen Elements 610 mit einer Matrix von Detektorelementen zu messen, und optional eine Antriebsvorrichtung 630, die eingerichtet ist, um eine Position des optischen Elements 610 beispielsweise entlang der z-Achse einzustellen. Eine Steuerung 640 kann zur Temperaturauswertung und Regulierung der Antriebsvorrichtung 630 eingerichtet sein. Die Temperaturverteilung wird ortsaufgelöst beispielsweise für eine gesamte Oberfläche des optischen Elements 610, wie die erste Oberfläche oder die zweite Oberfläche, gemessen. Insbesondere kann die Temperaturverteilung in der x-y-Ebene gemessen werden. Bei einer gekrümmten Oberfläche des optischen Elements 610 kann die Temperaturverteilung einer Projektion der gekrümmten Oberfläche in der x-y-Ebene entsprechen.

Die Steuerung 640 kann die Antriebsvorrichtung 630 steuern, um eine Position des optischen Elements 610 basierend auf der gemessenen Temperaturverteilung einzustellen. Beispielsweise kann die Position des optischen Elements 610 entlang der z-Achse, die parallel zur optischen Achse sein kann, verstellt werden. Durch das Ändern der Position des optischen Elements 610 kann der Fokus des optischen Elements 610 eingestellt werden. Insbesondere kann die Steuerung 640 die Antriebsvorrichtung 630 steuern, um den Fokus des optischen Elements 610 im Wesentlichen konstant zu halten.

In Figur 6 geben "+" und "-" eine positive bzw. eine negative Fokusverschiebung an. Ein beispielhafter, durch Temperaturänderung induzierter Fokusversatz in Abhängigkeit des Temperaturgradienten ist in Figur 7 dargestellt. Durch den erfindungsgemäßen Aufbau kann je nach Material und spezifischen Eigenschaften des optischen Elements eine präzise aktive Kompensation des Fokusversatzes erfolgen. Des Weiteren kann die Temperatur-Detektoranordnung 620 gemäß Ausführungsformen (steile) einzelne Temperaturanstiege auf dem optischen Element 610 erkennen und als Frühwarnsystem eine Zerstörung des optischen Elements 610 prognostizieren.

Gemäß typischen Ausführungsformen kann eine Lincarität zwischen dem Temperaturgradienten ΔT und der Fokusverschiebung Δf ermittelt und hinterher kompensiert werden. Hierzu kann eine Thermosäulen-Anordnung (Thermopile Array) als die Temperatur-Detektoranordnung 620 verwendet werden, die den Temperaturgradienten ΔT des optischen Elements 610, der aus der zweidimensionale Temperaturverteilung bestimmt wird, überwacht. Mittels der Steuerung 640 kann die Antriebsvorrichtung 630 geregelt werden, wobei die Steuerung 640 die Fokusverschiebung Δf so nachregelt, dass Δf ≈ 0 ist, um eine präzise Kompensation des Fokusversatzes bei Laseranwendungen zu gewährleisten.

Figur 8 zeigt eine beispielhafte Fokusverschiebung in Abhängigkeit eines Temperaturgradienten mit Regressionsgerade. Mittels einer vorherigen Referenzmessung eines bestimmten optischen Systems können Kenndaten aufgenommen werden. Figur 8 zeigt bei einer beispielhaften Referenzmessung mit sauberer Linse die dT-dz Fokusverschiebung der Linse bzw. eines Linsensystems mit dazugehöriger Regressionsgerade. Hierdurch kann eine Steigung bestimmt werden, die für das Laserbearbeitungssystem, wie beispielsweise einen Laserbearbeitungskopf, und dessen optisches System individuell ist. Mittels Software können die aus der Regressionsgerade ermittelten Steigungen in einer Datenbank z.B. in der Steuerung 640 hinterlegt werden. Basierend darauf kann bei jedem entsprechenden Temperaturgradienten eine passende motorische Nachstellung beispielsweise in Form einer z-Achsenverschiebung der Linse bzw. des optischen Elements 110 erfolgen, um den Fokusversatz zu kompensieren.

Figur 9(a) zeigt eine Temperatur-Detektoranordnung gemäß Ausführungsformen der vorliegenden Offenbarung. Die Temperatur-Detektoranordnung weist eine Matrix aus Detektorelementen (Pixel) auf. Figur 9(b) zeigt eine Aufnahme mit einer 32x32 Thermosäulen-Anordnung zum Detektieren eines lokalen Temperaturanstiegs.

Erfindungsgemäß ist die Temperatur-Detektoranordnung eine Thermosäulen-Anordnung (Thermopile Array). Die Thermosäulen-Anordnung kann die Temperatur des optischen Elements ortsaufgelöst messen, um damit einen Temperaturgradienten des optischen Elements aufnehmen.

Eine beispielhafte Thermosäulen-Anordnung kann mindestens eine $2\times2$ Matrix aus Detektorelementen aufweisen. FIG. 9(a) zeigt eine $32\times32$ Matrix mit insgesamt 1024 Pixel Auflösung und einem Öffnungswinkel von $90°\times90°$, die eine Auflösung des beispielhaften optischen Elements von ca. 350 Pixeln bietet, wie es in Figur 9(b) dargestellt ist. Alternativ kann beispielsweise eine Thermosäulen-Anordnung mit einer 8x8 Matrix mit einem Öffnungswinkel von $60°\times60°$ und einer Auflösung von 64 Pixel verwendet werden. Die kleinen Abmessungen einer solchen Thermosäulen-Anordnung lassen sich leicht in kleinstem Raum integrieren. Die maximal mögliche Framerate kann beispielsweise bei 60Hz liegen.

Gemäß einigen Ausführungsformen, die mit anderen hier beschriebenen Ausführungsformen kombiniert werden können, besteht das optische Element aus Silizium. Durch die Si Linse kann erreicht werden, dass es zu einer Filterung von Rückreflexen des Laserstrahls kommt. Damit kann nur die Oberfläche des optischen Elements aufgenommen werden. Anders gesagt kann die Temperaturverteilung an der Oberfläche, wie der gesamten ersten Oberfläche oder zweiten Oberfläche, des optischen Elements bestimmt werden.

In manchen Ausführungsformen, die mit anderen hier beschriebenen Ausführungsformen kombiniert werden können, kann die Temperatur-Detektoranordnung eingerichtet sein, um eine absolute Temperaturverteilung oder eine relative Temperaturverteilung zu messen. Die absolute Temperaturverteilung basiert auf einer Messung der absoluten Temperatur, wohingegen die relative Temperaturverteilung eine Temperaturdifferenz angibt.

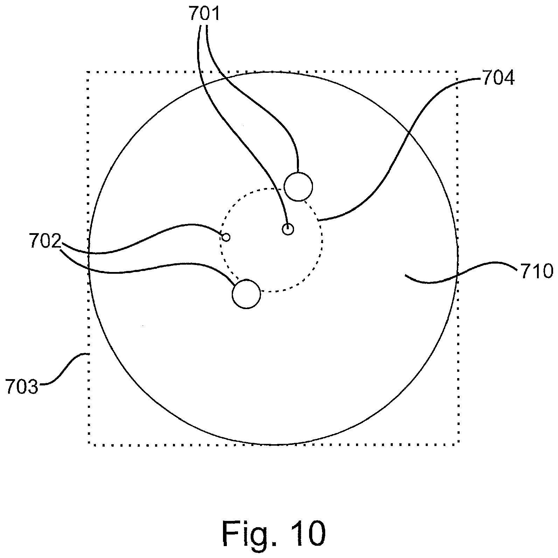

Erfindungsgemäß wird die Temperaturverteilung des optischen Elements in mindestens zwei Raumdimensionen, also zweidimensional gemessen. Der Begriff "zweidimensional" kann gemäß Ausführungsformen so verstanden werden, dass zwei oder mehr räumlich getrennte Temperaturmesspunkte (zwei oder mehr Pixel) beispielsweise in der Mitte der Linse erfasst werden. Beispielsweise kann die Temperatur-Detektoranordnung wenigstens eine 2x2 Matrix aus Detektorelementen aufweisen. Eine solche ortsaufgelöste zweidimensionale Messung unterscheidet sich von einer eindimensionalen Messung, bei der lediglich ein einzelner Temperaturmesspunkt (ein einziges Pixel) beispielsweise in der Mitte der Linse aufgenommen wird, wie im Folgenden anhand der Figur 10 näher erläutert wird.

Figur 10 zeigt einen Vergleich der Auflösung und der Genauigkeit der Temperaturbestimmung zwischen einer eindimensionalen Messung (ein einziges Pixel) und einer erfindungsgemäßen zweidimensionalen Messung (zwei oder mehr Pixel).

In Figur 10 sind schematisch heißeste Stellen 701 und kalte Stellen 702 auf einer Linse 710 dargestellt. Die heißesten Stellen 701 können ca. 38 °C und die kalten Stellen 702 können ca. 25 °C aufweisen. Die ortsaufgelöste Messung unter Verwendung der erfindungsgemäßen Temperatur-Detektoranordnung kann durch die komplette Überwachung der Linse 710 (Bezugszeichen „703") präzise ein Raster der höchsten Temperaturen erfassen und aus diesen einen realen Temperaturgradienten bilden. Durch die ortsaufgelöste Temperaturmessung der erfindungsgemäßen Temperatur-Detektoranordnung kann optional eine Beschädigung oder Schmutz an der Linse 710 detektiert werden.

Im Gegensatz dazu erfasst eine eindimensionale Messung eine Mittelung aus allen Werten beispielsweise aus der Mitte der Linse 710, wie es mit dem Bezugszeichen „704" angedeutet ist. Jedoch kann ein asymmetrisches Temperaturprofil stark variieren, so dass kein realer Temperaturgradient bestimmt werden kann.

Insbesondere können bei einer eindimensionalen Messung, wie es in JP 01122688 A beschrieben ist, ein Thermoelement am Rand der Linse und ein Thermopile, der die Mitte der Linse überwacht, verwendet werden. Diese Überwachung kann keine durch Dreck auf der Linse verursachten Absorptionseffekte detektieren. Lediglich eine Erfassung der gemittelten Temperaturerhöhung der kompletten Linse ist möglich. Dadurch lässt sich nicht exakt sagen, ob die gemittelte Temperatur durch höhere Leistung, durch asymmetrische Verteilung des Laserstrahls oder durch einen Defekt oder Verschmutzung der Linsenoberfläche zustande kommt. Die Thermosäulen-Anordnung der vorliegenden Offenbarung kann dies durch die 2D Auflösung der kompletten Linse leicht beispielsweise durch eine entsprechende Software mit einem technischen Algorithmus differenzieren.

Die eindimensionale Messung hat zudem den Nachteil, dass sie durch den Abstand und den Öffnungswinkel des 1D Thennopiles ein Sichtfeld (Field of View, FoV) besitzt, das in einem festen und nicht variablen Abstand und Winkel genau in der Mitte der Linse platziert ist. Anders gesagt muss der Sensor für jede Überwachung in unterschiedlichen Laserbearbeitungsköpfen in neuem Abstand und Winkel aufwendig konfiguriert werden. Dieser 1D Thermopile nimmt die fest eingestellte Mitte der Linse auf und mittelt daraus eine Temperatur $T_1$. Bei einer Vergrößerung des Überwachungsdurchmessers werden zugleich mehr niedrige Temperaturen aufgenommen und dadurch die Temperatur in der Linsenmitte noch stärker verfälscht.

Die Thermosäulen-Anordnung der vorliegenden Offenbarung hingegen kann durch die ortsaufgelöste Aufnahme die komplette Linse erfassen und beliebig den Durchschnitt der jeweils höchsten Temperaturen in der Mitte der Linse aufnehmen, auch wenn es ein asymmetrisches Temperaturprofil ist. Durch diesen Vorteil lässt sich die Thermosäulen-Anordnung für jede Linsengröße, jeden Strahldurchmesser und jede Strahlqualität individuell bei allen Laserbearbeitungsköpfen einsetzen.

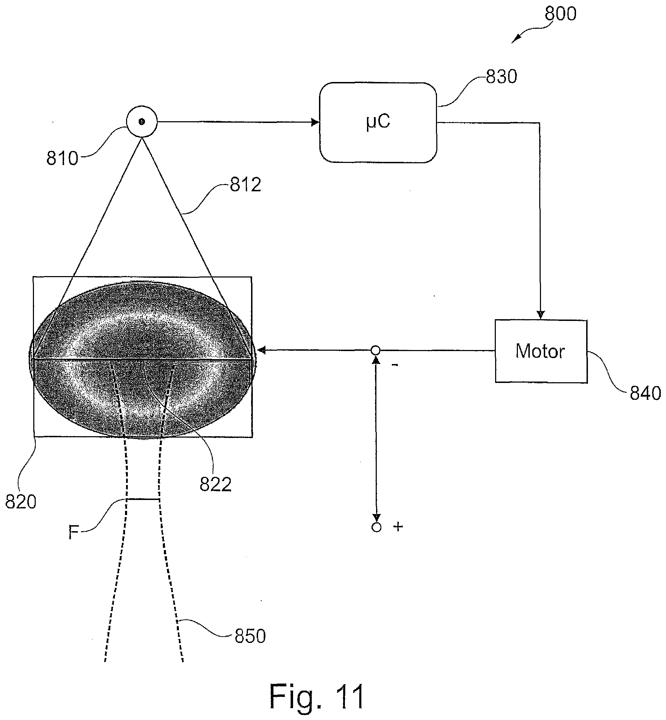

Figur 11 zeigt eine schematische Ansicht einer Vorrichtung 800 für ein Laserbearbeitungssystem gemäß weiteren Ausführungsformen der vorliegenden Offenbarung.

Die Vorrichtung 800 weist eine Thermosäulen-Anordnung 810 mit einem Öffnungswinkel 812 auf, die ein Bild 820 von einem Temperaturgradienten ($\Delta T$) der Linse bzw. des optischen Elements 110 aufnimmt. Das Bild 820 ist ein aufgespanntes Bild in x-y-Richtung, wodurch die komplette Linse aufgenommen werden kann. Durch die hohe Pixelzahl kann eine Mittelung der Temperatur $T_1$ in der Mitte der Linse stattfinden, unabhängig vom Durchmesser des Laserstrahls. Die Thermosäulen-Anordnung 810 kann die heißesten Punkte auf der Linse beliebig bestimmen und bildet so ein präzises Temperaturprofil. Die Thermosäulen-Anordnung 810 kann als Referenzwert ebenfalls die kühlen Stellen am Linsenrand mitteln, um eine exaktere Temperatur $T_2$ am Linsenrand zu bestimmen. Die Steuerung 830 wertet den Gradienten aus und verstellt motorisch die Position der Linse, um die Fokuslage F nachzuregeln. Insbesondere kann ein Motor 840 die Linse entlang einer z-Verschiebungsachse bewegen. Bezugszeichen 850 gibt die Kaustik des Laserstrahls an.

Gemäß Ausführungsformen kann die in den Referenzmessungen aufgenommene Steigung m (siehe z.B. Figur 8) in der Steuerung 830 für beliebige optische Systeme abgespeichert werden. Dabei können in der Referenzmessung die Fokusverschiebung $\Delta f = z_{Verschiebung}$ durch ein Strahldiagnosemessgerät für die jeweiligen $\Delta T$ aufgenommen und anschließend die Steigung ermittelt werden:

Die Thermosäulen-Anordnung kann durch ihre ortsaufgelöste Temperaturmessung den Temperaturgradienten $\Delta T$ auswerten. Beispielsweise nimmt die Thermosäulen-Anordnung ein Mittelmaß der höchsten Temperatur von der Linsenmitte zum Rand hin auf:

$$\Delta T = T_1 - T_2$$

Die z-Verschiebung kann ausgedrückt werden durch:

$$z_{Verschiebung} = (\Delta T + C)/m$$

C ist ein optionaler Offsetfaktor, der je nach Linsenmaterialien und Messergebnissen manuell hinzugefügt werden kann. Ein Vorteil der erfindungsgemäßen Vorrichtung ist, dass die Thermosäulen-Anordnung zur Kompensation ausreicht, da in den abgespeicherten Steigungsfaktor m nicht nur der Fokusversatz der Fokussierlinse eingeht, sondern m auch Informationen über den Fokusversatz des gesamten optischen Systems enthält.

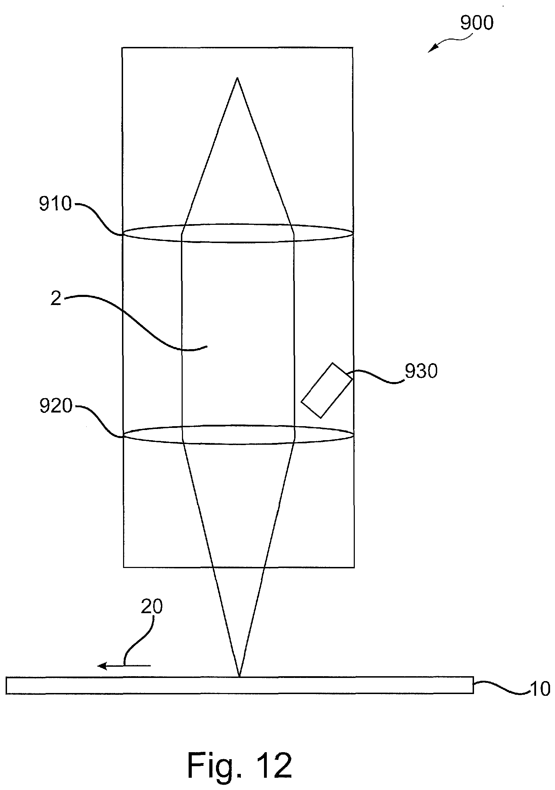

Figur 12 zeigt eine schematische Darstellung eines Laserbearbeitungssystems 900 gemäß Ausführungsformen der vorliegenden Offenbarung, wie beispielsweise eines Laserbearbeitungskopfes.

Das Laserbearbeitungssystem bzw. der Laserbearbeitungskopf 900 umfasst eine Laserquelle (nicht gezeigt) zur Bereitstellung eines Laserstrahls, wie z.B. eine Lichtleitfaser o.ä., eine Kollimator-Optik 910, die eingerichtet ist, um einen Laserstrahl 2 zu kollimieren, eine Fokussier-Optik 920, die eingerichtet ist, um den Laserstrahl 2 auf ein Werkstück 10 zu fokussieren, und die Vorrichtung für ein Laserbearbeitungssystem gemäß den hier beschriebenen Ausführungsformen, wobei das optische Element eine Fokussierlinse der Fokussier-Optik 920 ist. Die Temperatur-Detektoranordnung kann eine Thermosäulen-Anordnung 930 mit einer Matrix von Detektorelementen sein.

Das Laserbearbeitungssystem 900 umfasst eine Laservorrichtung zum Erzeugen des Laserstrahls 2 (auch als "Bearbeitungsstrahls" oder "Bearbeitungslaserstrahl" bezeichnet). Das Laserbearbeitungssystem 900 oder Teile davon, wie beispielsweise ein Schweißkopf, kann gemäß Ausführungsformen entlang der Bearbeitungsrichtung 20 bewegbar sein. Die Bearbeitungsrichtung 20 kann eine Schneidrichtung und/oder eine Bewegungsrichtung des Laserbearbeitungssystems 900, wie beispielsweise des Schweißkopfes, bezüglich des Werkstücks 10 sein. Insbesondere kann die Bearbeitungsrichtung 20 eine horizontale Richtung sein. Die Bearbeitungsrichtung 20 kann auch als "Vorschubrichtung" bezeichnet werden.

Durch den Einbau der Thermosäulen-Anordnung unter einem entsprechenden Winkel im Gehäuse eines Bearbeitungskopfes entsteht eine gestauchte Aufnahme der Linse bzw. eine Art elliptische Aufnahme des Sichtfeldes. Dieser Effekt wird durch die Wölbung einer Linse noch verstärkt. Da diese gestauchte Aufnahme vom Winkel und Abstand der Thermosäulen-Anordnung abhängt, lässt sich diese durch eine geometrisch verbesserte Platzierung des Sensors verbessern. Da die Auflösung der Thermosäulen-Anordnung sehr hoch sein kann, hat dieser Effekt kaum Auswirkungen auf die Messgenauigkeit und lässt sich vernachlässigen. Eine zusätzliche Verbesserung dieser Stauchung des Bildes kann mit einem geringeren Field of View (FoV, Öffnungswinkel des Gesichtsfelds) der Thermosäulen-Anordnung erreicht werden.

Erfindungsgemäß wird die Fokuslage des optischen Elements, wie beispielsweise einer Fokuslinse, eingestellt. Hierzu wird eine zweidimensionale Temperaturverteilung des optischen Elements gemessen und benutzt, um die Fokuslage einzustellen. Beispielsweise kann eine Thermosäulen-Matrix verwendet werden, um eine zweidimensionale "Karte" der Temperaturverteilung an einer Oberfläche des optischen Elements zu erstellen, aus der ein Temperaturgradient ermittelt werden kann. Durch eine solche ortsaufgelöste Messung kann die Fokuslage mit hoher Präzision eingestellt werden. Gemäß einem Aspekt wird das optische Element aktiv geheizt, um die Fokuslage basierend auf der gemessenen Temperatur einzustellen. Beispielsweise kann das optische Element derart geheizt werden, dass das optische Element eine im wesentlichen homogene Temperaturverteilung aufweist. Durch das selektive Heizen kann die Fokuslage mit hoher Präzision eingestellt werden. Gemäß einem weiteren Aspekt wird eine Position des optischen Elements basierend auf der gemessenen Temperaturverteilung eingestellt, um die Fokuslage einzustellen.

**Patentansprüche**

1. Eine Vorrichtung (100, 600) für ein Laserbearbeitungssystem, umfassend:

   ein optisches Element (110, 610), das in einem Strahlengang der Vorrichtung anzuordnen ist; und
   eine Temperatur-Detektoranordnung (115, 620);
   **gekennzeichnet dadurch, dass** die Temperatur-Detektoranordnung (115, 620) eine Thermosäulen-Matrix umfasst, die eingerichtet ist, um eine zweidimensionale Temperaturverteilung des optischen Elements (110, 610) zu messen.

2. Die Vorrichtung (100) nach Anspruch 1, weiter umfassend:
   wenigstens eine Heizvorrichtung (120), die am optischen Element (110) angeordnet ist, um dem optischen Element (110) Wärmeenergie zuzuführen.

3. Die Vorrichtung (100) nach Anspruch 2, wobei die wenigstens eine Heizvorrichtung (120) an einem Randbereich des optischen Elements (110) angeordnet ist, um dem Randbereich die Wärmeenergie zuzuführen.

4. Die Vorrichtung (100) nach Anspruch 2 oder 3, wobei die wenigstens eine Heizvorrichtung eine Vielzahl von Heizelementen (122) aufweist, insbesondere wobei die Vielzahl von Heizelementen (122) einen aus mehreren Segmenten bestehenden Heizring bildet, oder wobei die wenigstens eine Heizvorrichtung einen einzelnen Heizring (400) umfasst.

5. Die Vorrichtung (500) nach einem der Ansprüche 2 bis 4, wobei die wenigstens eine Heizvorrichtung (520) umfasst:

   eine Basis (524); und
   eine Vielzahl von Wärmequellen (522), die an der (524) Basis angeordnet sind.

6. Die Vorrichtung (500) nach einem der Ansprüche 2 bis 5, weiter mit einem thermischen Kopplungselement (530) zum thermischen Koppeln der Wärmequellen (524) mit dem optischen Element (510), wobei die Wärmequellen (522) elektrische Widerstände sind.

7. Die Vorrichtung (500) nach einem der Ansprüche 2 bis 6, weiter umfassend eine Halterung (540) für das optische Element (510), wobei die Halterung (540) zwischen der wenigstens einen Heizvorrichtung (520) und dem optischen Element (510) angeordnet ist und eingerichtet ist, um einen thermischen Kontakt zwischen dem optischen Element (510) und der wenigstens einen Heizvorrichtung (520) bereitzustellen.

8. Die Vorrichtung (100) nach einem der Ansprüche 2 bis 7, weiter umfassend eine Steuerung (130), die eingerichtet ist, um die wenigstens eine Heizvorrichtung (120) so zu steuern, dass das optische Element (110) eine vorbestimmte Temperaturverteilung aufweist, und wobei die Steuerung (130) eingerichtet ist, um einen Fokus des optischen Elements (110) durch Zuführen der Wärmeenergie einzustellen.

9. Die Vorrichtung (100) nach einem der Ansprüche 1 bis 8, weiter umfassend eine Antriebsvorrichtung (630), die eingerichtet ist, um eine Position des optischen Elements (610) entlang der optischen Achse einzustellen, und eine Steuerung (640) zum Steuern der Antriebsvorrichtung (630), um durch Einstellen der Position des optischen Elements (610) basierend auf der gemessenen Temperaturverteilung einen Fokus des optischen Elements (610) einzustellen.

10. Die Vorrichtung (100, 600) nach einem der Ansprüche 1 bis 9, wobei das optische Element mindestens eines von einer Linse, einem Linsensystem, einer Fokussierlinse, einer Kollimierlinse, eine Zerstreuungslinse, einer Strahlformungsoptik, einem Schutzglas und einem Strahlteiler umfasst.

11. Ein Laserbearbeitungssystem (900), umfassend:

eine Laserquelle zum Bereitstellen eines Laserstrahls; und
die Vorrichtung nach einem der Ansprüche 1 bis 10, wobei das optische Element in einem Strahlengang des Laserbearbeitungssystems (900) angeordnet ist.

12. Ein Verfahren zum Einstellen einer Fokuslage eines optischen Elements (110, 610) in einem Laserbearbeitungssystem, **gekennzeichnet durch**:
Messen einer zweidimensionalen Temperaturverteilung des optischen Elements (110, 610) mit einer Thermosäulen-Matrix.

13. Das Verfahren nach Anspruch 12, weiter umfassend ein selektives Heizen eines Randbereichs des optischen Elements (110), um die Fokuslage einzustellen.

14. Das Verfahren nach Anspruch 12 oder 13, weiter umfassend:
Bereitstellen einer im wesentlichen homogenen Temperaturverteilung für das optische Element (110) durch das selektive Heizen.

15. Das Verfahren nach einem der Ansprüche 12 bis 14, weiter umfassend ein Einstellen einer Position des optischen Elements (610) entlang der optischen Achse basierend auf der gemessenen Temperaturverteilung.

**Claims**

1. A device (100, 600) for a laser machining system, comprising:

an optical element (110, 610) which is to be arranged in a beam path of said device; and
a temperature detector arrangement (115, 620);
**characterised in that** the temperature detector arrangement (115, 620) comprises a thermopile matrix which is configured to measure a two-dimensional temperature distribution of said optical element (110, 610).

2. The device (100) according to claim 1, further comprising:
at least one heating device (120) arranged on said optical element (110) in order to supply thermal energy to said optical element (110).

3. The device (100) according to claim 2, wherein said at least one heating device (120) is arranged on an edge region of said optical element (110) in order to supply the thermal energy to the edge region.

4. The device (100) according to claim 2 or 3, wherein said at least one heating device includes a plurality of heating elements (122), in particular wherein said plurality of heating elements (122) forms a heating ring consisting of several segments, or wherein said at least one heating device comprises a single heating ring (400).

5. The device (500) according to one of claims 2 to 4, wherein said at least one heating device (520) comprises:

a base (524); and
a plurality of heat sources (522) which are located on said base (524).

6. The device (500) according to one of claims 2 to 5, further comprising a thermal coupling element (530) for thermally coupling said heat sources (524) to said optical element (510), wherein said heat sources (522) are electrical resistors.

7. The device (500) according to one of claims 2 to 6, further comprising a holder (540) for said optical element (510), said holder (540) being arranged between said at least one heating device (520) and said optical element (510) and being configured to provide thermal contact between said optical element (510) and said at least one heating device (520).

8. The device (100) according to one of claims 2 to 7, further comprising a controller (130) configured to control said at least one heating device (120) such that said optical element (110) has a predetermined temperature distribution, and wherein said controller (130) is configured to adjust a focus of said optical element (110) by supplying thermal energy.

9. The device (100) according to one of claims 1 to 8, further comprising a drive device (630) configured to adjust a position of said optical element (610) along the optical axis, and a controller (640) for controlling said drive device (630) to adjust a focus of said optical element (610) by adjusting the position of said optical element (610) based on the measured temperature distribution.

10. The device (100, 600) according to one of claims 1 to 9, wherein said optical element comprises at least one of a lens, a lens system, a focusing lens, a collimating lens, a diverging lens, a beam shaping optics, a protective glass and a beam splitter.

11. A laser machining system (900), comprising:

a laser source for providing a laser beam; and
the device according to one of claims 1 to 10, wherein said optical element is arranged in a beam path of said laser machining system (900).

12. A method of adjusting a focus position of an optical element (110, 610) in a laser machining system, comprising: measuring a two-dimensional temperature distribution of said optical element (110, 610) with a thermopile matrix.

13. The method according to claim 12, further comprising selectively heating an edge region of said optical element (110) in order to adjust the focus position.

14. The method of claim 12 or 13, further comprising: providing a substantially homogeneous temperature distribution for said optical element (110) by the selective heating.

15. The method according to one of claims 12 to 14, further comprising adjusting a position of said optical element (610) along the optical axis based on the measured temperature distribution.

**Revendications**

1. Dispositif (100, 600) pour un système d'usinage au laser, comprenant :

un élément optique (110, 610) à agencer dans un trajet de faisceau du dispositif ; et
un agencement de détection de température (115, 620) ;
**caractérisé en ce que** l'agencement de détection de température (115, 620) comporte une matrice de thermopiles conçue pour mesurer une répartition bidimensionnelle de la température de l'élément optique (110, 610).

2. Dispositif (100) selon la revendication 1, comprenant en outre :
au moins un dispositif de chauffage (120) agencé sur l'élément optique (110) afin de fournir de l'énergie thermique à l'élément optique (110).

3. Dispositif (100) selon la revendication 2, dans lequel le au moins un dispositif de chauffage (120) est agencé sur une zone de bord de l'élément optique (110) afin de fournir l'énergie thermique à la zone de bord.

4. Dispositif (100) selon la revendication 2 ou 3, dans lequel le au moins un dispositif de chauffage comporte une pluralité d'éléments chauffants (122), en particulier dans lequel la pluralité d'éléments chauffants (122) forme un anneau chauffant constitué de plusieurs segments, ou dans lequel le au moins un dispositif de chauffage comporte un seul anneau chauffant (400).

5. Dispositif (500) selon l'une des revendications 2 à 4, dans lequel le au moins un dispositif de chauffage (520) comprend :

   une base (524) ; et
   une pluralité de sources de chaleur (522) agencées sur la base (524).

6. Dispositif (500) selon l'une des revendications 2 à 5, ayant en outre un élément de couplage thermique (530) pour le couplage thermique des sources de chaleur (524) avec l'élément optique (510), dans lequel les sources de chaleur (522) sont des résistances électriques.

7. Dispositif (500) selon l'une des revendications 2 à 6, comprenant en outre un support (540) pour l'élément optique (510), dans lequel le support (540) est agencé entre le au moins un dispositif de chauffage (520) et l'élément optique (510) et est conçu pour assurer un contact thermique entre l'élément optique (510) et le au moins un dispositif de chauffage (520).

8. Dispositif (100) selon l'une des revendications 2 à 7, comprenant en outre une commande (130) conçue pour commander le au moins un dispositif de chauffage (120) de sorte que l'élément optique (110) a une répartition de température prédéfinie, et dans lequel la commande (130) est conçue pour régler un foyer de l'élément optique (110) pour fournir de l'énergie thermique.

9. Dispositif (100) selon l'une des revendications 1 à 8, comprenant en outre un dispositif d'entraînement (630) conçu pour régler une position de l'élément optique (610) le long de l'axe optique, et une commande (640) pour commander le dispositif d'entraînement (630) afin de régler un foyer de l'élément optique (610) en réglant la position de l'élément optique (610) sur la base de la répartition de température mesurée.

10. Dispositif (100, 600) selon l'une des revendications 1 à 9, dans lequel l'élément optique comprend au moins un élément parmi une lentille, un système de lentilles, une lentille de focalisation, une lentille de collimation, une lentille divergente, une optique de mise en forme de faisceau, un verre de protection et un séparateur de faisceau.

11. Système d'usinage au laser (900), comprenant :

    une source laser pour fournir un faisceau laser ; et
    le dispositif selon l'une des revendications 1 à 10, dans lequel l'élément optique est agencé dans un trajet de faisceau du système d'usinage au laser (900).

12. Procédé pour régler une position du foyer d'un élément optique (110, 610) dans un système d'usinage au laser, **caractérisé par** l'étape consistant à :
    mesurer une répartition bidimensionnelle de la température de l'élément optique (110, 610) avec une matrice de thermopiles.

13. Procédé selon la revendication 12, comprenant en outre un chauffage sélectif d'une zone de bord de l'élément optique (110) afin de régler la position du foyer.

14. Procédé selon la revendication 12 ou 13, comprenant en outre l'étape consistant à :
    assurer une répartition de température sensiblement homogène pour l'élément optique (110) par le chauffage sélectif.

15. Procédé selon l'une des revendications 12 à 14, comprenant en outre le réglage d'une position de l'élément optique (610) le long de l'axe optique sur la base de la répartition de température mesurée.

Fig. 1

Fig. 2

Fig. 3A

Fig. 3B

Fig. 4

Fig. 5

610
630
600

+

M

-

620

640

Fig. 6

8

7

6

5

4

3

2

1

0

Temperaturgradient ΔT in Kelvin

0          200          400          600

Fokusverschiebung Δf in µm

Fokusverschiebung in
Abhängigkeit
des Temperaturgradienten

Fig. 7

## Fig. 8

## Fig. 9

(a)

(b)

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8274743 B2
- US 5991004 A
- JP 2000094173 A
- JP 01122688 A
- US 2013341309 A1
- WO 2007128835 A1
- EP 1477853 A2
- US 2010201958 A1
- US 2011080663 A1
- EP 0965871 A1